# EUROPEAN PATENT APPLICATION

(11) **EP 4 439 808 A1**
(43) Date of publication of application: **02.10.2024**
(21) Application number: 24162488.1
(22) Date of filing: 08.03.2024
(51) Int. Cl.: H01M 50/105, H01M 10/04, H01M 50/553, H01M 50/548, H01M 50/119, H01M 50/121

(54) **BATTERY CELL, MANUFACTURING DEVICE FOR BATTERY CELL AND MANUFACTURING METHOD OF BATTERY CELL**

(30) Priority: 29.03.2023 KR 20230040997
(71) Applicant: SK On Co., Ltd., Seoul 03161 (KR)
(72) Inventor: CHO, Eun Soo, 34124 Daejeon (KR); BYUN, Jae Gyu, 34124 Daejeon (KR)
(74) Representative: Stolmár & Partner Patentanwälte PartG mbB

(57) **Abstract**

A battery cell includes an electrode assembly; a pouch including an accommodation portion accommodating the electrode assembly and a sealing portion sealing at least a portion of the accommodation portion; and an electrode lead connected to the electrode assembly. The sealing portion includes a first sealing portion surrounding at least a portion of the electrode lead, and a second sealing portion extending from the first sealing portion and including at least a portion folded with respect to a folding line. The pouch includes a metal layer forming an exterior of the pouch, an insulating resin layer disposed below the metal layer, and a deformed region extending from the insulating resin layer. The folding line is disposed between the electrode assembly and the deformed region.

## Description

### BACKGROUND

### 1. FIELD

The present disclosure relates to a battery cell, a manufacturing device for a battery cell and a manufacturing method of a battery cell.

### 2. DESCRIPTION OF RELATED ART

Unlike a primary battery, a secondary battery may be charged and discharged such that secondary battery may be applied to devices in various fields such as a digital camera, a mobile phone, a laptop, a hybrid car, an electric car, and an energy storage system (ESS). A secondary battery may include a lithium ion battery, a nickel-cadmium battery, a nickel-metal hydride battery, or a nickel-hydrogen battery.

A secondary battery may be manufactured to include flexible pouch-type battery cells or rigid prismatic or cylindrical may-type battery cells. A plurality of battery cells may be formed as a stacked cell assembly.

The cell assembly may be disposed in a module housing and may form a battery module, and a plurality of battery modules may be disposed in a pack housing and may form a battery pack.

### SUMMARY

Gas may be generated by an electrode assembly disposed in the battery cell. When gas emitted from a battery cell is transferred to battery cells or other components, heat transfer may occur or other components may be damaged. At least a portion of a pouch may be sealed to prevent gas leakage. At least a portion of a sealing portion of the pouch may be bent to increase space utilization.

When a sealing tool transmits pressure to the pouch to seal the pouch, a portion of the insulating resin layer of the pouch may be deformed. When the deformed insulating resin layer extends to a region in which the sealing portion is bent, insulation of the pouch may be destroyed.

The present disclosure may provide a battery cell, a device for manufacturing a battery cell, and a method of manufacturing a battery cell which may prevent insulation breakdown occurring in a process of sealing a battery cell.

The battery cell, the device for manufacturing a battery cell and the method of manufacturing a battery cell may be widely applied in green technology fields such as electric vehicles, battery charging stations, and solar power generation and wind power generation using batteries. Also, the battery cell, the device for manufacturing a battery cell and the method of manufacturing a battery cell may be used in eco-friendly electric vehicles, hybrid vehicles, and the like, to prevent climate change by suppressing air pollution and greenhouse gas emissions.

The battery cell of present disclosure includes an electrode assembly, a pouch including an accommodation portion accommodating the electrode assembly and a sealing portion sealing at least a portion of the accommodation portion, and an electrode lead connected to the electrode assembly. The sealing portion includes a first sealing portion surrounding at least a portion of the electrode lead, and a second sealing portion extending from the first sealing portion and including at least a portion folded with respect to a folding line. The pouch includes a metal layer forming an exterior of the pouch, an insulating resin layer disposed below the metal layer, and a deformed region extending from the insulating resin layer. The folding line is disposed between the electrode assembly and the deformed region.

According to an embodiment, the metal layer may include a first metal layer forming at least a portion of an upper portion of the pouch and a second metal layer forming at least a portion of a lower portion of the pouch. The insulating resin layer may include a first insulating resin layer attached to the first metal layer, and a second insulating resin layer attached to the second metal layer. The deformed region may be disposed between the first insulating resin layer and the second insulating resin layer, and may connect the first insulating resin layer to the second insulating resin layer.

According to an embodiment, the deformed region may include a first end having a first thickness facing the folding line and a second end having a second thickness greater than the first thickness and opposite to the first end.

According to an embodiment, the deformed region may be disposed in the second sealing portion.

According to an embodiment, a first distance between the deformed region and the electrode assembly may be greater than a second distance between the folding line and the electrode assembly.

According to an embodiment, the deformed region may include a first protrusion portion extending toward the folding line and a second protrusion portion extending in a direction opposite to the first protrusion portion. A first length of the first protrusion portion may be smaller than a second length of the second protrusion portion.

A manufacturing device of a battery cell of present disclosure includes a first sealing tool configured to seal a sealing portion of a pouch accommodating an electrode assembly, and a second sealing tool configured to be spaced further apart from the electrode assembly than the first sealing tool. The second sealing tool is configured to seal the sealing portion after the first sealing tool seals the sealing portion.

According to an embodiment, at least one of the first sealing tool or the second sealing tool may include a sealing surface configured to be in contact with the pouch, and at least a portion of the sealing surface may be inclined.

According to an embodiment, the pouch may include an electrode accommodation portion configured to accommodate the electrode assembly. The sealing portion may include a first region surrounding at least a portion of the accommodation portion, and a second region extending from the first region. The first sealing tool may be configured to be in contact with the first region. The second sealing tool may be configured to be in contact with the second region.

According to an embodiment, the first sealing tool may include a first upper sealing bar configured to be in contact with an upper portion of the first region and a first lower sealing bar configured to be in contact with an upper portion of the first region. The second sealing tool may include a second upper sealing bar configured to be in contact with an upper portion of the second region and a second lower sealing bar configured to be in contact with a lower portion of the second region.

According to an embodiment, the first sealing tool may be configured to form a first deformed region by transferring pressure and heat to an insulating resin layer of the pouch, and the second sealing tool may be configured to form a second deformed region by pressurizing and heating the insulating resin layer of the pouch.

According to an embodiment, a first width of the first sealing tool may be shorter than a second width of the second sealing tool.

A manufacturing method of a battery cell of present disclosure includes a process of preparing a pouch including an insulating resin layer, a process of accommodating an electrode assembly in an electrode accommodation portion of the pouch, a first sealing process of sealing a first region of a sealing portion surrounding at least a portion of the electrode accommodation portion using a first sealing tool, a second sealing process of sealing a second region of the sealing portion extending from the first region using a second sealing tool configured to be spaced further apart from the electrode assembly than the first sealing tool, and a folding process of folding at least a portion of the sealing portion with respect to a folding line.

According to an embodiment, a first distance between the electrode assembly and the deformed region formed in the first region due to the first sealing process may be greater than a second distance between the folding line and the electrode assembly.

According to an embodiment, the second sealing process may be performed after the first sealing process is performed.

### BRIEF DESCRIPTION OF DRAWINGS

Certain aspects, features, and advantages of the present disclosure are illustrated by the following detailed description with reference to the accompanying drawings.
FIG. 1 is a perspective diagram illustrating a battery cell according to an embodiment of present disclosure;
FIGS. 2A and 2B are diagrams illustrating a process of sealing a pouch and a device for sealing a pouch according to an embodiment of present disclosure;
FIG. 3 is a flowchart illustrating a process of manufacturing a battery cell according to an embodiment of present disclosure;
FIG. 4 is a diagram illustrating a process of sealing a pouch and a device for sealing a pouch according to an embodiment of present disclosure; and
FIG. 5 is a flowchart illustrating a process of manufacturing a battery cell according to an embodiment of present disclosure.

### DETAILED DESCRIPTION

Features of the present disclosure disclosed in this patent document are illustrated in embodiments with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure.

The following detailed description is, therefore, not to be taken in a limiting sense, and the scope of the present disclosure are defined only by appended claims, appropriately interpreted, along with the full range of equivalents to which the claims are entitled.

In the drawings, same elements will be indicated by same reference numerals. For ease of description, the same reference numerals may be used in different embodiments. That is, even when components having the same reference numerals are illustrated in a plurality of drawings, the plurality of drawings do not all refer to the same embodiment.

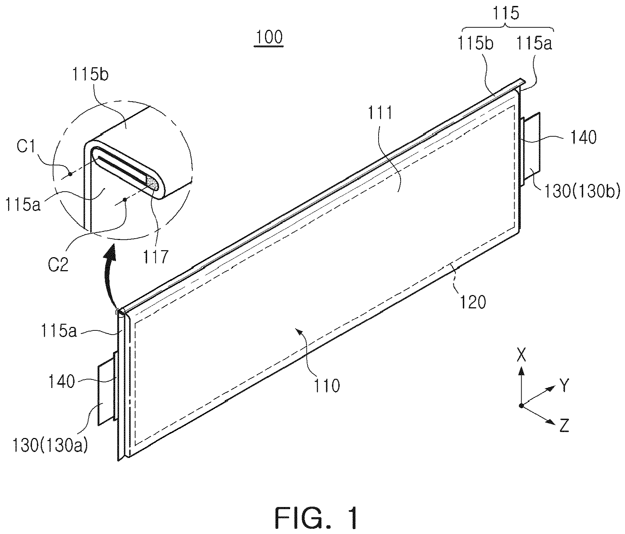

FIG. 1 is a perspective diagram illustrating a battery cell according to an embodiment of present disclosure.

Referring to FIG. 1, the battery cell 100 may include a pouch 110, an electrode assembly 120, and an electrode lead 130. The battery cell 100 may be configured as a secondary battery. For example, the battery cell 100 may be implemented as a lithium ion battery, but an example embodiment thereof is not limited thereto. For example, the battery cell 100 may be implemented as a nickel-cadmium electric battery, a nickel-metal hydride battery, or a nickel-hydrogen battery which may be charged and discharged.

The battery cell 100 may be configured as a pouch-type secondary battery. However, the battery cell 100 is not limited to a pouch-type secondary battery. For example, in another embodiment, the battery cell 100 may be configured as a prismatic secondary battery or a cylindrical secondary battery.

The pouch 110 may form at least a portion of an exterior of the battery cell 100. The pouch 110 may include an electrode receiving portion 111 for accommodating the electrode assembly 120 and a sealing portion 115 for sealing at least a portion of the circumference of the electrode receiving portion 111. The electrode receiving portion 111 may provide a space to accommodate the electrode assembly 120 and the electrolyte solution.

The sealing portion 115 may be formed by bonding at least a portion of the perimeter of the pouch 110. The sealing portion 115 may be formed in the form of a flange extending outwardly from the electrode receiving portion 111, which is formed in the shape of a container, and may be disposed along at least a portion of an outer portion of the electrode receiving portion 111. In an embodiment, the sealing portion 115 may include a first sealing portion 115a in which the electrode lead 130 is disposed and a second sealing portion 115b in which the electrode lead 130 is not disposed. A portion of the electrode lead 130 may be drawn out or exposed externally of the pouch 110. In a position in which the electrode lead 130 is drawn out, to increase the degree of sealing the first sealing portion 115a and to ensure an electrical insulating state, the electrode lead 130 may be covered by the insulating film 140. The insulating film 140 may be formed of a film material having a thickness smaller than that of the electrode lead 130, and may be attached to both surfaces of the electrode lead 130.

In an embodiment, the electrode leads 130 may be disposed to oppose in opposite directions on both sides of the battery cell 100 in the length direction (Y-axis direction). For example, the electrode lead 130 may include a positive lead 130a having a first polarity (e.g., a cathode) facing one side (e.g., the first direction (+Y-direction)) of the battery cell 100 in the length direction and a negative lead 130b having a second polarity (e.g., an anode) facing the other side (e.g., the second direction (-Y-direction)) in the length direction. In the embodiment illustrated in FIG. 1, the sealing portion 115 may include two first sealing portions 115a in which the electrode lead 130 is disposed and a second sealing portion 115b in which the electrode lead 130 is not disposed.

The direction in which electrode lead 130 is disposed may be selectively designed. In an embodiment (e.g., in FIG. 1), the electrode lead 130 may include the positive lead 130a and the negative lead 130b disposed in the opposite direction of the positive lead 130a with respect to the electrode assembly 120. In FIG. 1, the electrode leads 130 may be disposed to face in opposite directions on both sides of the battery cell 100 in the length direction (e.g., Y-axis direction), but the structure of the electrode leads 130 is not limited thereto. For example, the two electrode leads 130 may be arranged substantially in parallel in the length direction (e.g., Y-axis direction) of the battery cell 100.

The pouch 110 is not limited to the structure in which the sealing portion 115 is formed on three sides by folding a sheet of exterior material as illustrated in FIG. 1.

In an embodiment, at least a portion of the sealing portion 115 may be formed in a folded shape, folded at least once. By folding at least a portion of the sealing portion 115, bonding reliability of the sealing portion 115 may be improved and the area of the sealing portion 115 may be reduced. Among the sealing portions 115 according to an embodiment, the second sealing portion 115b in which the electrode lead 130 is not disposed may be folded twice and fixed by the adhesive member 117. For example, the second sealing portion 115b may be folded by 180° along a first bent line C1 and may be folded again along a second bent line C2. In this case, the adhesive member 117 may be filled in the second sealing portion 115b.

The angle at which the second sealing portion 115b is bent or the number of times the portion is folded may be varied. For example, in a non-illustrated embodiment, the second sealing portion 115b may be folded by 90° with respect to the first sealing portion 115a.

The electrode assembly 120 may include a cathode plate, an anode lead, and a separator. The separator may prevent contact between the cathode plate and the anode lead. The electrode assembly 120 may be manufactured by a variety of methods (e.g., stacked, jelly roll, or Z-folded methods).

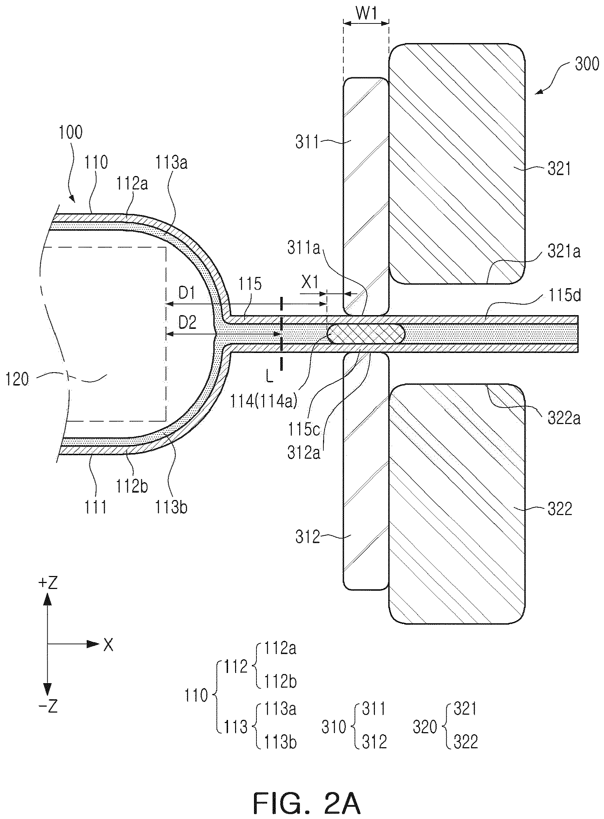

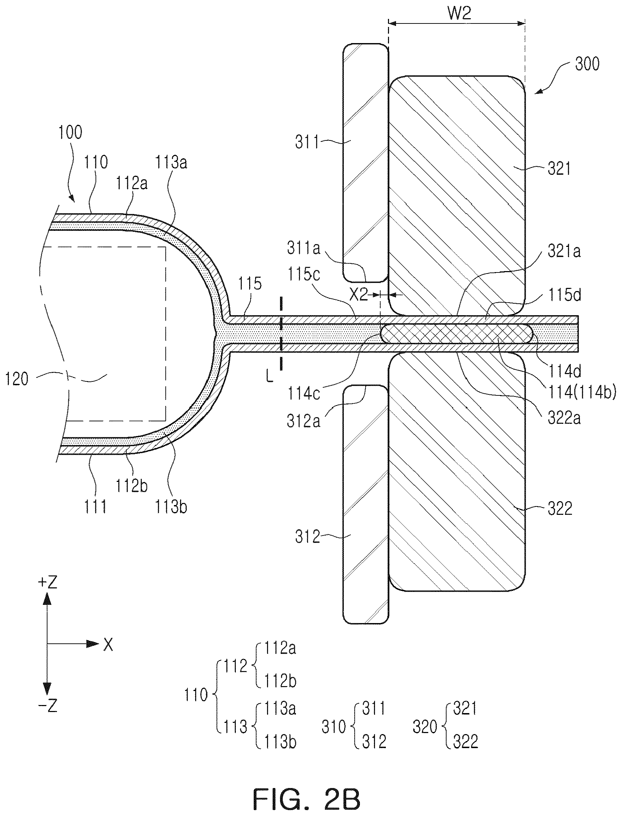

FIGS. 2A and 2B are diagrams illustrating a process of sealing a pouch and a device for sealing a pouch according to an embodiment of present disclosure.

Referring to FIGS. 2A and 2B, a manufacturing device 300 for a battery cell may include sealing tools 310 and 320 for sealing a sealing portion 115 of a battery cell 100. The description of the battery cell 100, pouch 110 and/or the electrode assembly 120 including an electrode accommodation portion 111 and a sealing portion 115 in FIG. 1 may be applied to the battery cell 100, the pouch 110 and/or the electrode assembly 120 in FIGS. 2A and 2B.

According to an embodiment, the pouch 110 may have a structure in which different materials are stacked. For example, the pouch 110 may include a metal layer 112 forming at least a portion of an external surface of pouch 110. The pouch 110 may include an insulating resin layer 113 disposed below the metal layer 112. For example, the insulating resin layer 113 may be attached to an internal surface of the metal layer 112.

According to an embodiment, the pouch 110 may include a plurality of layers. For example, the metal layer 112 may include a first metal layer 112a forming at least a portion of an upper portion (e.g., +Z direction) of the pouch 110 and a second metal layer 112b forming at least a portion of a lower portion (e.g., -Z direction) of the pouch 110. The insulating resin layer 113 may include a first insulating resin layer 113a attached to the first metal layer 112a and a second insulating resin layer 113b attached to the second metal layer 112b. The metal layer 112 may include aluminum. The insulating resin layer 113 may include polymer (e.g., polypropylene). The electrode accommodation portion 111 and the sealing portion 115 of the pouch 110 may be formed by the metal layer 112 and the insulating resin layer 113.

The first metal layer 112a may be formed integrally with the second metal layer 112b. The first insulating resin layer 113a may be formed integrally with the second insulating resin layer 113b. For example, the pouch 110 may be folded to accommodate the electrode assembly 120. The first metal layer 112a and first insulating resin layer 113a may be a portion of the pouch 110 disposed in an upper portion (+Z direction) with respect to the sealing portion 115, and the second metal layer 112b and the second insulating resin layer 113b may be disposed in different directions with respect to at least a portion of the second metal layer 112b and at least a portion of the second insulating resin layer 113b with respect to the deformed region 114.

According to an embodiment, the battery cell 100 may include a deformed region 114. The deformed region 114 may be a portion of the pouch 110 deformed by the manufacturing device 300 for a battery cell. For example, at least a portion of the insulating resin layer 113 of the pouch 110 may melt by heat and pressure received from the sealing tools 310 and 320 of the manufacturing device 300 for a battery cell. For example, a portion of the first insulating resin layer 113a and a portion of the second insulating resin layer 113b may melt and may be connected or coupled to each other. In an embodiment, the deformed region 114 may be disposed between the first insulating resin layer 113a and the second insulating resin layer 113b, and the first insulating resin layer 113a and the second insulating resin layer 113b may be connected or coupled to each other by the deformed region 114. In an embodiment, the melted portion of the first insulating resin layer 113a and the melted portion of the second insulating resin layer 113b may be referred to as a deformed region 114.

The sealing portion 115 may include a first region 115c and a second region 115d extending from the first region 115c. The first region 115c may surround at least a portion of the electrode accommodation portion 111. When the sealing portion 115 is unfolded (e.g., the sealing portion 115 in FIGS. 2A and/or 2B is not folded with respect to the folding line L), the first region 115c may be closer to the electrode assembly 120 than the second region 115d.

The second sealing portion (e.g., second sealing portion 115b in FIG. 1) of the pouch 110 may be in contact with sealing tools 310 and 320 of the manufacturing device 300 for a battery cell. For example, the deformed region 114 may be disposed in the second sealing portion (e.g., the second sealing portion 115b in FIG. 1).

According to an embodiment, a portion of the sealing portion 115 (e.g., second sealing portion 115b) in which the deformed region 114 is disposed may be folded with respect to the folding line L. By folding the second sealing portion 115b with respect to the folding line L, energy density of the battery module or the battery pack including the battery cell 100 may be improved. The folding line L in FIGS. 2A and/or 2B may be the first bending line C1 and/or the second bending line C2 in FIG. 1.

According to an embodiment, the manufacturing device 300 for a battery cell may seal the sealing portion 115 of the battery cell 100 using the sealing tools 310 and 320. For example, the sealing tools 310 and 320 may move to an upper portion (+Z direction) or a lower portion (-Z direction) and may provide heat and/or pressure to the sealing portion 115.

According to an embodiment, the sealing tools 310 and 320 may apply pressure to the sealing portion 115 of the battery cell 100 in sequence. For example, the sealing tools 310 and 320 may include the first sealing tool 310 and the second sealing tool 320. The second sealing tool 320 may seal the sealing portion 115 after the first sealing tool 310 seals the sealing portion 115.

According to an embodiment, the second sealing tool 320 may be spaced further apart from the electrode assembly 120 than the first sealing tool 310. For example, the first sealing tool 310 may be in contact with the first region 115c of the sealing portion 115. The second sealing tool 320 may be in contact with the second region 115d of the sealing portion 115. According to an embodiment, the manufacturing device 300 for a battery cell may be referred to as a device for sealing a battery cell. The first sealing tool 310 and the second sealing tool 320 may be referred to as a first sealing bar and a second sealing bar, respectively.

According to an embodiment, the first sealing tool 310 may form the first deformed region 114a. For example, the first sealing tool 310 may transfer pressure and heat to the insulating resin layer 113 of the pouch 110 and may form the first deformed region 114a. The first deformed region 114a may be formed by melting the insulating resin layer 113 disposed in the first region 115c of the sealing portion 115. The second sealing tool 320 may form the second deformed region 114b. For example, the second sealing tool 320 may transfer pressure and heat to the insulating resin layer 113 of the pouch 110 and may form the second deformed region 114b. The second deformed region 114b may be formed by melting the insulating resin layer 113 disposed in the second region 115d of the sealing portion 115. The second deformed region 114b may be spaced further apart from the electrode assembly 120 than the first deformed region 114a.

For ease of description, the first deformed region 114a may not be provided in FIG. 2B, but after the first sealing tool 310 operates, the battery cell 100 may include the first deformed region 114a.

According to an embodiment, the sealing tools 310 and 320 may provide pressure to upper and lower portions of the pouch 110. For example, the first sealing tool 310 may include a first upper sealing bar 311 configured to be in contact with an upper portion (+Z direction) of the first region 115c, and a first lower sealing bar 312 configured to be in contact with a lower portion (-Z direction) of the first region 115c. For example, the second sealing tool 320 may include a second upper sealing bar 321 configured to be in contact with an upper portion (+Z direction) of the second region 115d, and a second lower sealing bar 322 configured to be in contact with a lower portion (-Z direction) of the second region 115d. As the first upper sealing bar 311 and the first lower sealing bar 312 move to be adjacent to each other, the first region 115c of the sealing portion 115 may be pressurized and heated, and the sealing portion 115 may be sealed. As the second upper sealing bar 321 and the second lower sealing bar 322 move to be adjacent to each other, the second region 115d of the sealing portion 115 may be pressurized and heated, and the sealing portion 115 may be sealed.

According to an embodiment, the sealing tools 310 and 320 may be in contact with the sealing portion 115. For example, the first upper sealing bar 311 may include a first sealing surface 311a configured to be in contact with an upper portion of the first region 115c of the sealing portion 115, and the first lower sealing bar 312 may include a second sealing surface 312a configured to be in contact with a lower portion of the first region 115c of the sealing portion 115. The second upper sealing bar 321 may include a third sealing surface 321a configured to be in contact with an upper portion of the second region 115d of the sealing portion 115, and the second lower sealing bar 322 may include a fourth sealing surface 322a configured to be in contact with a lower portion of the second region 115d of the sealing portion 115.

According to an embodiment, the deformed region 114 may protrude by pressure received from the sealing tools 310 and 320. For example, when the deformed region 114 is pushed to the folding line L by the sealing tools 310 and 320, insulation of the pouch 110 may be destroyed.

The size of protrusion of the deformed region 114 may change on the basis of the widths W1 and W2 of the sealing tools 310 and 320. For example, the deformed region 114 may include a protrusion portion protruding due to pressure applied from the sealing tools 310 and 320.

According to an embodiment, the first width W1 of the first sealing tool 310 may be shorter than the second width W2 of the second sealing tool 320. For example, the first width W1 may be less than 10 mm. The second width W2 may be greater than 10 mm.

To seal the pouch 110, the sealing portion 115 may be required to receive pressure from a designated area or more. By sealing the sealing portion 115 using the plurality of sealing tools 310 and 320 operating in sequence, the degree of protrusion of the deformed region 114 may be reduced. For example, after the sealing portion 115 of the pouch 110 is sealed using the first sealing tool 310 having the first width W1, the sealing portion 115 may be sealed using the second sealing tool 320 having the second width W2. By forming the second deformed region 114b after the first deformed region 114a is formed, the degree of protrusion (e.g., the first length X1 of the first protrusion portion) with respect to the folding line L of the deformed region 114 may be reduced. The deformed region 114 may not be in contact with the folding line L.

The folding line L may be disposed between the deformed region 114 and the electrode assembly 120. The first length X1 of the first protrusion portion may be shorter than the second length X2 of the second protrusion portion. For example, the first distance D1 between the deformed region 114 and the electrode assembly 120 may be greater than the second distance D2 between the electrode assembly 120 and the folding line L. Since the sealing tools 310 and 320 have a shape to reduce the first length X1 of the first protrusion portion, the deformed region 114 may not be in contact with the folding line L. The first protrusion portion may be a portion of the deformed region 114 protruding further than the first sealing tool 310, and the second protrusion portion may be a portion of the deformed region 114 protruding further than the second sealing tool 320. For example, the first length X1 may be a length from one end of the deformed region 114 to the first sealing tool 310, and the second length X2 may be a length from the other end of the deformed region 114 to the second sealing tool 320. In an embodiment, the first length X1 and the second length X2 may be referred to as a first degree of protrusion and a second degree of protrusion.

In FIGS. 2A and/or 2B, for ease of description, the components of the manufacturing device 300 for a battery cell other than the sealing tools 310 and 320 are not illustrated, but the manufacturing device 300 for a battery cell may include other components (e.g., a heater) for sealing the battery cell 100 in addition to the sealing tools 310 and 320.

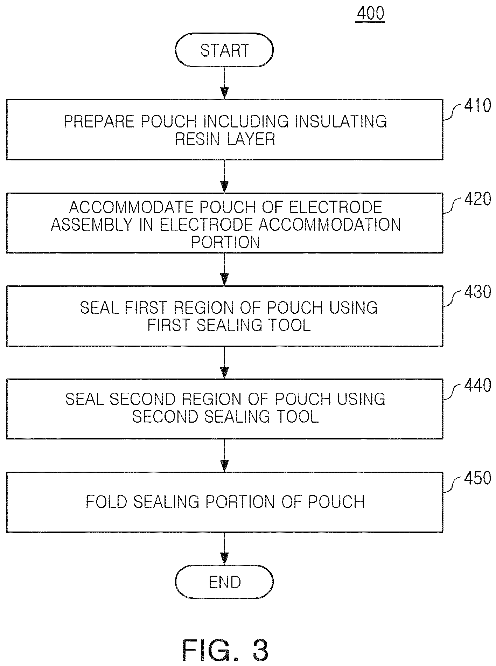

FIG. 3 is a flowchart illustrating a process of manufacturing a battery cell according to an embodiment of present disclosure. The manufacturing method 400 for a battery cell of FIG.3 is a method of manufacturing the battery cell 100 in FIGS. 1, 2A and/or 2B.

Referring to FIG. 3, a manufacturing method 400 for the battery cell (e.g., the battery cell 100 in FIGS. 2A and/or 2B) may include a process 410 of preparing a pouch (e.g., the pouch 110 in FIGS. 2A and 2B) including an insulating resin layer (e.g., the insulating resin layer 113 in FIGS. 2A and 2B), a process 420 of accommodating the electrode assembly (e.g., the electrode assembly 120 in FIG. 2A) in the electrode accommodation portion (e.g., the electrode accommodation portion 11) in FIG. 2A) of the pouch 110, a first sealing process 430 of sealing a first region (e.g., the first region 115c) of the sealing portion (e.g., the sealing portion 115 in FIG. 2A) surrounding at least a portion of the electrode accommodation portion 111 using the first sealing tool (e.g., the first sealing tool 310 in FIG. 2A), and/or a second sealing process 440 of sealing the second region (e.g., the second region 115d in FIG. 2B) of the sealing portion extending from the first region 115c using a second sealing tool (e.g., the second sealing tool 320 in FIG. 2B). The description of the battery cell 100 in FIGS. 1, 2A, and/or 2B and the manufacturing device 300 for a battery cell in FIGS. 2A and/or 2B may be applied to the manufacturing method 400 for a battery cell in FIG. 3. The manufacturing device 300 for a battery cell in FIGS. 2A and 2B may perform the sealing processes 430 and 440. According to an embodiment, the process 410 of preparing the pouch 110 and the process 420 of accommodating the electrode assembly 120 in the electrode accommodation portion 111 may be performed separately from the sealing processes 430 and 440.

According to an embodiment, the first sealing process 430 may pressurize and heat the first region 115c of the sealing portion 115 surrounding at least a portion of the electrode accommodation portion 111 using the first sealing tool 310. For example, in the first sealing process 430, the first sealing tool 310 may form the first deformed region 114a and may seal the first region 115c of the sealing portion 115.

According to an embodiment, the second sealing process 440 may pressurize and heat the second region 115d of the sealing portion 115 using the second sealing tool 320. For example, in the second sealing process 440, the second sealing tool 320 may form the second deformed region 114b and may seal the second region 115d of the sealing portion 115. The second sealing tool 320 may be spaced further apart from the electrode assembly 120 than the first sealing tool 310. The second sealing process 440 may be performed after the first sealing process 430 is performed. For example, the second deformed region 114b formed by the second sealing process 440 may be spaced further apart from the electrode assembly 120 than the first deformed region 114a formed by the first sealing process 430.

The manufacturing method 400 for a battery cell may include a folding process 450 of folding the sealing portion 115) of the pouch 110. The folding process 450 may be a process of folding the sealing portion 115 with respect to the folding line (e.g., folding line L in FIG. 2A).

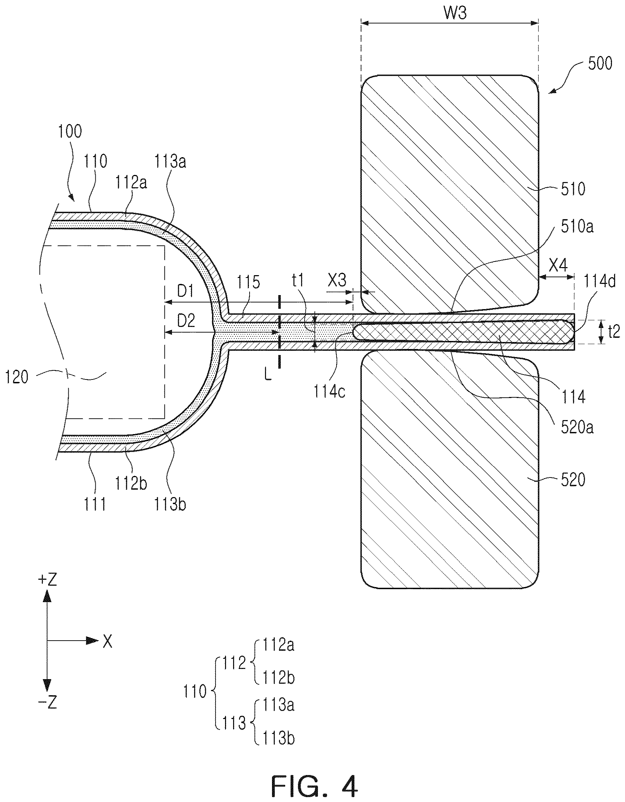

FIG. 4 is a diagram illustrating a process of sealing a pouch and a device for sealing a pouch according to an embodiment of present disclosure.

Referring to FIG. 4, the manufacturing device 500 for a battery cell include sealing tools 510 and 520 for sealing the sealing portion 115 of the battery cell 100.

The description of the pouch 110 and/or electrode assembly 120 including the battery cell 100, the electrode accommodation portion 111 and the sealing portion 115 in FIGS. 1, 2A and/or 2B may be applied to the battery cell 100, the pouch 110, and/or the electrode assembly 120 in FIG. 4. At least a portion of the description of the manufacturing device 300 for a battery cell in FIGS. 2A and/or 2B may be applied to the manufacturing device 500 for a battery cell in FIG. 4.

According to an embodiment, the deformed region 114 may have different thicknesses for each portion. For example, the deformed region 114 may include a first end 114c facing the electrode assembly 120 and a second end 114d opposite to the first end 114c when the sealing portion 115 is unfolded. The first thickness t1 of the first end 114c may be smaller than the second thickness t2 of the second end 114d.

According to an embodiment, the size of protrusion of the deformed region 114 may change on the basis of the thickness of the ends 114c and 114d. For example, the larger the thicknesses of ends 114c and 114d, the more the degree of protrusion of deformed region 114 may increase. According to an embodiment, the third length X3 of the third protrusion portion of the deformed region 114 may be smaller than the fourth length X4 of the fourth protrusion portion. By forming the thickness of the first end 114c to be smaller than the second end 114d, the degree of protrusion (e.g., third length X3 of the third protrusion portion) with respect to the folding line L of the deformed region 114 may be reduced. The deformed region 114 may not extend to the folding line L. In an embodiment, the third length X3 and the fourth length X4 may be referred to as a third degree of protrusion and a fourth degree of protrusion, respectively.

According to an embodiment, the manufacturing device 500 for a battery cell may include sealing tools 510 and 520. The sealing tools 510 and 520 may include at least a portion of an inclined sealing surface. For example, the upper sealing tool 510 may include a first inclined surface 510a configured to be in contact with an upper portion (+Z direction) of the sealing portion 115, and the lower sealing tool 520 may include a second inclined surface 520a configured to be in contact with a lower portion (-Z direction) of the sealing portion 115. In an embodiment, the first inclined surface 510a and the second inclined surface 520a may be referred to as the fifth sealing surface 510a and the sixth sealing surface 520a, respectively.

According to an embodiment, at least one of the first inclined surface 510a or the second inclined surface 520a may be configured to be inclined. The first inclined surface 510a and the second inclined surface 520a may have a shape to be in contact with the sealing portion 115 from a portion adjacent to the electrode assembly 120. For example, the closer the first inclined surface 510a and second inclined surface 520a are to the electrode assembly 120, the greater the thicknesses of the upper sealing tool 510 and the lower sealing tool 520 may be.

According to an embodiment, the thickness of the deformed region 114 formed by the sealing tools 510 and 520 may change by the inclined surfaces 510a and 520a. For example, the thickness of the deformed region 114 formed using a sealing tool (not illustrated) not having an inclined surface may be greater than the first thickness t1 of the first end 114c of the deformed region 114 formed using the sealing tools 510 and 520 having the third width W3 in FIG. 4, and may be smaller than the second thickness t2 of second end 114d.

According to an embodiment, the degrees of protrusion X3 and X4 of the deformed region 114 formed by the sealing tools 510 and 520 may change by the inclined surfaces 510a and 520a. For example, the degree of protrusion of the deformed region 114 formed using a sealing tool (not illustrated) not having an inclined surface may be greater than a third length X3 of the third protrusion portion of the first end 114c of the deformed region 114 formed using the sealing tools 510 and 520 formed to have the third width W3 in FIG. 4, and may be smaller than the fourth length X4 of the fourth protrusion portion of the second end 114d.

According to an embodiment, at least a portion of the structure of the battery cell 100 and the manufacturing device 500 for a battery cell illustrated in FIG. 4 may be applied to the battery cell 100 and the manufacturing device 300 for a battery cell described in FIGS. 2A and 2B. For example, at least a portion of the sealing surfaces 311a, 312a, 321a, and 322a of the first sealing tool 310 and/or the second sealing tool 320 in FIGS. 2A and 2B may be configured to be inclined. At least a portion of the deformed region 114 in FIGS. 2A and 2B may have different thicknesses for each portion.

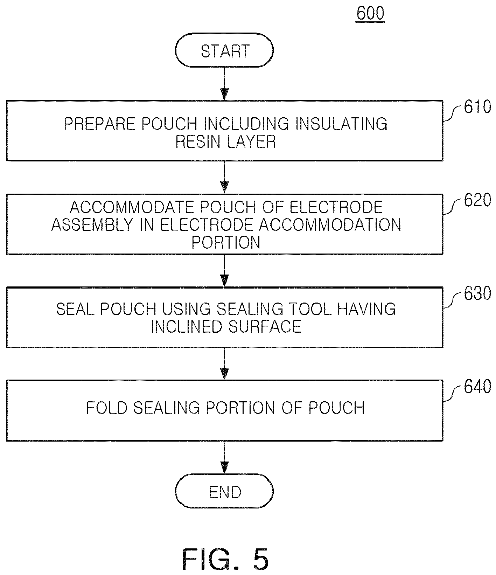

FIG. 5 is a flowchart illustrating a process of manufacturing a battery cell according to an embodiment.

The manufacturing method of a battery cell in FIG. 5 may be a method of manufacturing the battery cell 100 in FIGS. 1 and/or 4.

Referring to FIG. 5, the manufacturing method 600 for a battery cell (e.g., the battery cell 100 in FIG. 4) may include a process 610 of preparing a pouch (e.g., the pouch 110 in FIG. 4) including an insulating resin layer (e.g., the insulating resin layer 113 in FIG. 4), a process 620 of accommodating an electrode assembly (e.g., the electrode assembly 120 in FIG. 4) in the electrode accommodation portion (e.g., the electrode accommodation portion 111 in FIG. 4) of the pouch 110, a sealing process 630 of sealing the pouch using a sealing tool having an inclined surface, and a folding process 640 of folding the sealing portion 115.

The description of the process 610 of preparing the pouch 110, the process 620 of accommodating the electrode assembly 120 in the electrode accommodation portion 111, and the folding process 640 in FIG. 5may be applied to the process 410 of preparing the pouch 110, the process 420 of accommodating the electrode assembly 120 in the electrode accommodation portion 111, and the folding process 450 in FIG. 3.

According to an embodiment, the sealing process 630 may pressurize and heat the sealing portion 115 of the electrode accommodation portion 111 using the sealing tools 510 and 520. For example, in the sealing process 630, the upper sealing tool 510 and the lower sealing tool 520 may form a deformed region 114 and may seal the sealing portion 115.

In the sealing process 630, the sealing tools 510 and 520 may provide pressure from a portion of the sealing portion 115 close to the electrode assembly 120. By pressurizing from a portion of the sealing portion 115 close to the electrode assembly 120, the third length X3 of the third protrusion portion of the first end 114c of the deformed region 114 facing the electrode assembly 120 may be smaller than the fourth length. As the third length X3 of the third protrusion portion reduces, the deformed region 114 may not extend to the folding line L, and the deformed region 114 may not be in contact with the folding line L.

According to the aforementioned embodiments, insulation breakdown due to deformation of the pouch occurring when the pouch is sealed may be reduced.

Only specific examples of implementations of certain embodiments are described. Variations, improvements and enhancements of the disclosed embodiments and other embodiments may be made with respect to the disclosure of this patent document.

## Claims

1. A battery cell, comprising:
an electrode assembly;
a pouch including an accommodation portion accommodating the electrode assembly and a sealing portion sealing at least a portion of the accommodation portion; and
an electrode lead connected to the electrode assembly,
wherein the sealing portion includes a first sealing portion surrounding at least a portion of the electrode lead, and a second sealing portion extending from the first sealing portion and including at least a portion folded with respect to a folding line,
wherein the pouch includes a metal layer forming an exterior of the pouch, an insulating resin layer disposed below the metal layer, and a deformed region extending from the insulating resin layer, and
wherein the folding line is disposed between the electrode assembly and the deformed region.

2. The battery cell of claim 1,
wherein the metal layer includes a first metal layer forming at least a portion of an upper portion of the pouch and a second metal layer forming at least a portion of a lower portion of the pouch,
wherein the insulating resin layer includes a first insulating resin layer attached to the first metal layer, and a second insulating resin layer attached to the second metal layer, and
wherein the deformed region is disposed between the first insulating resin layer and the second insulating resin layer, and connects the first insulating resin layer to the second insulating resin layer.

3. The battery cell of claims 1 or 2, wherein the deformed region includes a first end having a first thickness facing the folding line and a second end having a second thickness greater than the first thickness and opposite to the first end.

4. The battery cell of any one of preceding claims, wherein the deformed region is disposed in the second sealing portion.

5. The battery cell of any one of preceding claims, wherein a first distance between the deformed region and the electrode assembly is greater than a second distance between the folding line and the electrode assembly.

6. The battery cell of any one of preceding claims,
wherein the deformed region includes a first protrusion portion extending toward the folding line and a second protrusion portion extending in a direction opposite to the first protrusion portion, and
wherein a first length of the first protrusion portion is smaller than a second length of the second protrusion portion.

7. A manufacturing device for a battery cell, comprising:
a first sealing tool configured to seal a sealing portion of a pouch accommodating an electrode assembly; and
a second sealing tool configured to be spaced further apart from the electrode assembly than the first sealing tool,
wherein the second sealing tool is configured to seal the sealing portion after the first sealing tool seals the sealing portion.

8. The manufacturing device for a battery cell of claim 7,
wherein at least one of the first sealing tool or the second sealing tool includes a sealing surface configured to be in contact with the pouch, and
wherein at least a portion of the sealing surface is inclined.

9. The manufacturing device for a battery cell of claims 7 or 8,
wherein the pouch includes an electrode accommodation portion accommodating the electrode assembly,
wherein the sealing portion includes a first region surrounding at least a portion of the accommodation portion, and a second region extending from the first region,
wherein the first sealing tool is configured to be in contact with the first region, and
wherein the second sealing tool is configured to be in contact with the second region.

10. The manufacturing device for a battery cell of claim 9,
wherein the first sealing tool includes a first upper sealing bar configured to be in contact with an upper portion of the first region and a first lower sealing bar configured to be in contact with an upper portion of the first region, and
wherein the second sealing tool includes a second upper sealing bar configured to be in contact with an upper portion of the second region and a second lower sealing bar configured to be in contact with a lower portion of the second region.

11. The manufacturing device for a battery cell of any one of claims 7 to 10,
wherein the first sealing tool is configured to form a first deformed region by transferring pressure and heat to an insulating resin layer of the pouch, and
wherein the second sealing tool is configured to form a second deformed region by pressurizing and heating the insulating resin layer of the pouch.

12. The manufacturing device for a battery cell of any one of claims 7 to 11, wherein a first width of the first sealing tool is shorter than a second width of the second sealing tool.

13. A manufacturing method for a battery cell, comprising:
a process of preparing a pouch including an insulating resin layer;
a process of accommodating an electrode assembly in an electrode accommodation portion of the pouch;
a first sealing process of sealing a first region of a sealing portion surrounding at least a portion of the electrode accommodation portion using a first sealing tool;
a second sealing process of sealing a second region of the sealing portion extending from the first region using a second sealing tool configured to be spaced further apart from the electrode assembly than the first sealing tool; and
a folding process of folding at least a portion of the sealing portion with respect to a folding line.

14. The manufacturing method for a battery cell of claim 13, wherein a first distance between the electrode assembly and the deformed region formed in the first region due to the first sealing process is greater than a second distance between the folding line and the electrode assembly.

15. The manufacturing method for a battery cell of claims 13 or 14, wherein the second sealing process is performed after the first sealing process is performed.
